# EUROPEAN PATENT APPLICATION

(11) **EP 1 006 431 A1**
(43) Date of publication of application: **07.06.2000**
(21) Application number: 99309525.6
(22) Date of filing: 29.11.1999
(51) Int. Cl.: G06F 3/12

(54) **Printing system and method**

(30) Priority: 02.12.1998 US 204989
(71) Applicant: Xerox Corporation, Rochester, New York 14644 (US)
(72) Inventor: Evans IV, Charles H., Manhattan Beach, California 90266 (US)
(74) Representative: Skone James, Robert Edmund

(57) **Abstract**

A printing system produces prints from a print job written in one of a plurality of page description languages with the print job assuming the form of a print job stream. The printing system includes a page description language guesser (700) having a plurality of PDL analyzing units (702-1...702-N) for sampling the print job stream, each PDL analyzing unit outputting an information signal which provides information regarding the print job stream. The PDL guesser, which receives the information signals, processes the information signals and outputs a filtered signal which indicates the page description language in which the print job is written. The page description language (PDL) guesser determines the PDL or Image Format of the data sample of the document on a spooler (410). The guesser (700) then sets the PDL as an attribute on that document for the scheduler to read and the supervisor to direct the document to the appropriate printer for that PDL.

## Description

The present invention relates to a printing system that distributes documents among a plurality of printers in a networked printing system and, more particularly, to a page description language (PDL) guesser to determine the page description language of the print job for the scheduler to route the print job to the appropriate printer for that page description language.

Enterprise print management systems provide the means to control and access various printers and to manage other related information remotely.

There are print servers that use a single document manager based on the protocol of DPA ISO 10175 which streamline document processing and allow for minimization of UMC. Examples of such servers may be found in products made available by Xerox Corporation under the "Document Centre" product name.

The enterprise print service will preferably employ an implementation known as the ISO document processing architecture (DPA) standard as envisioned by ISO/IEC 10175. The DPA print system is based on a two level client-server model. Both print spooler and printer supervisor act as servers.

A print client is a client acting as the user's agent that accepts commands, submits requests to print services, receives responses, generates per-user local job numbers, and remembers for each user where the jobs have been submitted. A print spooler is a server that accepts operations from print clients and schedules print jobs on its printer supervisors.

A printer supervisor accepts requests from clients (print spoolers) to print a job on its physical printer.

A physical printer is an actual piece of hardware that has its own printer supervisor controlling it, either directly or remotely. A queue contains jobs waiting to be printed. When a physical printer finishes or nearly finishes a job, its printer supervisor indicates to the spooler its readiness to accept another print job. The spooler scans the queues that feed the physical printer and a scheduling algorithm selects the next job and assigns that job to that physical printer by submitting the print job to the print supervisor using an ISO DPA Print operation.

A logical printer is the abstract entity that users specify to indicate where their job is to be printed and/or what characteristics their job has. Each logical printer has default attributes that the server supplies for those attributes that neither the user nor his print client has supplied. The spooler may assign a print job to the queue based on the specified logical printer, depending on the scheduling policy as established by its system administrator. In other words, a logical printer feeds one queue; each queue feeds one or more physical printers as established by the system administrator of the spooler.

A page description language (PDL) is a method of describing printed pages in a printer independent format. A PDL establishes as interface between the print driver or client and the print server or printer. No one standard PDL presently exists and as a result a number of industry standards have emerged. Currently existing PDL standards include PostScript.RTM. ("PS"), Hewlett Packard Printer Control Language ("HP-PCL") and Interpress Page Description Language.

The well-known commercially-available PDLs, such as PostScript and HP-PCL, relate mainly to the construction of various typefaces for characters and numerals for text. There are other conventions for organizing image data for graphics independent of any typefaces. These "image formats" include TIFF, CALS, as well as those image formats which are associated with facsimile transmission, such as CCITT fax Group 3 and fax Group 4. Image formats are a system of "shorthand" commands which enable raw image data (i.e., a set of binary numbers corresponding to black and white pixels) to be compressed into a more manageable form. To take one basic example, an image format such as TIFF or CALS may include an instruction within a data set corresponding to "print a white line" in lieu of a long string of numbers (such as zeros), each number corresponding to one individual pixel in the white line. In this way, image data may be retained in smaller memory spaces than would be required if every single pixel in an image had its own bit of memory. As used herein, the term "image data" shall apply to image data in either image format or PDL.

The control and software for printers in a system or network environment can be in the printer itself. Commonly, however, a major part of the system printer integration software operation may be in the print server connected into the system, (typically a stand alone but dedicated small computer or PC). The server typically functions as a "spooler" to buffer the jobs that are sent to it, as well as a page description language (PDL) "decomposer", for converting the PDL files (e.g., "Interpress.TM." or "PostScript.RTM.") to bitmapped files for application to the printer.

With any PDL or image format, there will inevitably be a step of translation of the PDL or image format data into a form usable by an output device, such as a printer. Printing hardware requires an input stream of binary data. Thus, the instructions within the image format, such as to "print a white line," will eventually have to be translated into the actual binary code. This code can then be applied to the modulation of a laser source in a raster output scanner, or applied sequentially to individual ejectors in an ink-jet printer.

A PDL Guesser is a software algorithm that determines the page description language (PDL) or Image Format in which a print job is written by analyzing a sample of the data.

It is an object of the present invention to use the page description language (PDL) guessers to determine the page description language of the print job for the scheduler to route the print job to the appropriate printer for that page description language.

According to the present invention, a printing system produces prints from a print job written in one of a plurality of page description languages with the print job assuming the form of a print job stream. The printing system includes a page description language guesser having a plurality of PDL analyzing units for sampling the print job stream, each PDL analyzing unit outputting an information signal which provides information regarding the print job stream. The PDL guesser, which receives the information signals, processes the information signals and outputs a filtered signal which indicates the page description language in which the print job is written.

The page description language (PDL) guesser determines the PDL or Image Format of the data sample of the document on the spooler. The guesser then sets the PDL as an attribute on that document for the scheduler to read and the supervisor to direct the document to the appropriate printer for that PDL.

An example of a printing system and method according to the invention will now be described with reference to the accompanying drawings, in which:-
Figure 1 is a schematic block diagram of the distributed printing system; and,
Figure 2 is a schematic block diagram depicting an arrangement for the page description language (PDL) guesser of Figure 1 to analyze a print job stream and determine the page description language in which the corresponding print job is written.

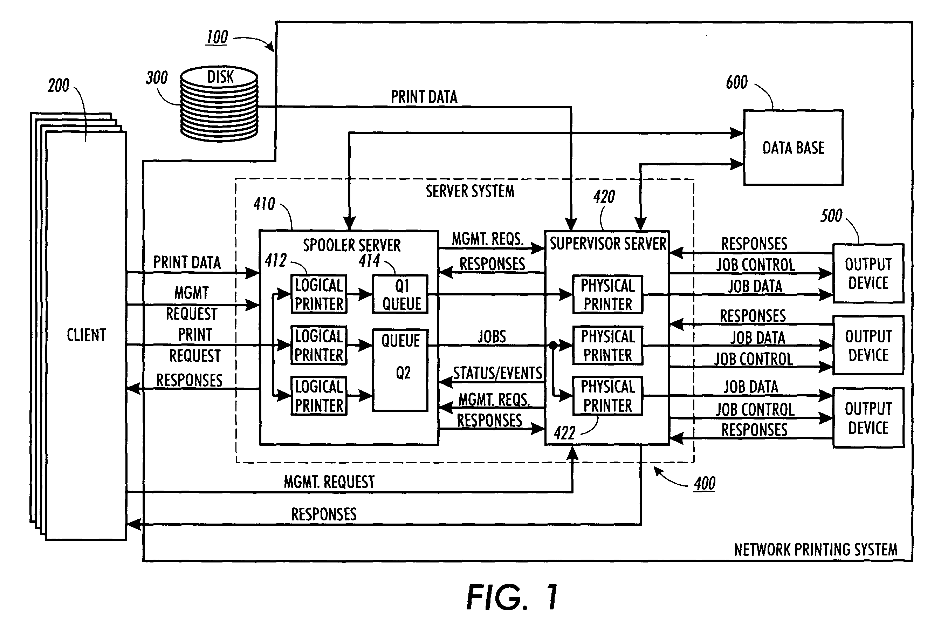

Reference is now made to Figure 1 illustrating the architecture of a client/server distributed printing system 100 of the present invention. The printing system 100 includes one or more clients 200, a general purpose computer system 400, which in this invention is preferably a server system, one or more output devices 500, a disk 300 and an attribute database 600. Each client 200 initiates print requests to print a specified file or files containing print data, and initiates management requests to manage printing systems, such as adding or deleting printers, canceling print requests and the like. The print data can include text or images created by an end user.

The server 400 receives print requests from the clients 200, either directly or via any other source of print requests, such as storage disk 300. The print requests include print data for one or more documents as well as printing instructions, i.e. simplex or duplex printing, stapling or binding, multiple copies, paper size and orientation, etcetera. The server 400 performs actions required for each request operation and returns responses to the corresponding client 200. The server 400 organizes documents into print jobs. A document represents a single user file that is to be printed. A print job represents a collection of one or more documents that are printed as a unit. The print job includes instructions for printing (such as production and finishing), event notification, and response delivery. The server 400 also is responsible for sending job data and associated job control commands to the output device 500.

Each output device 500 is a physical device or hardware that is capable of rendering images, text or documents to produce a hard copy output of the print jobs received from the server 400. Depending on the type of output device 500 and/or the settings of its particular features, each output device 500 returns responses to the server 200 indicating, for example, its current state. Output devices 500 can include, but are not limited to, printers, facsimile machines or pagers. However, as a nonlimiting example, this disclosure refers to the output devices 500 as printers, for simplicity.

In a preferred system, implemented on a general purpose computer, the server functions are split between two different server types, a spooler server 410 and a supervisor server 420. Additionally, such a printing system supports two types of output devices: logical printers 412 (LP1, LP2 and LP3) and physical printers 422 (PP1 and PP2).

In general, a spooler 410 takes print requests from multiple clients 200, converts the print requests into print jobs, schedules print jobs based on the print requests and then forwards the print jobs to a supervisor 420. The supervisor 420 provides the common interface between the spooler 410 and the output devices 500. The supervisor 420 takes the print jobs from the spooler 410 and invokes the designated printer to render the data.

The spooler 410 receives a client print request for a print job that specifies a particular logical printer. The spooler 410 then schedules the print job on an appropriate physical printer 422 associated with the specified logical printer 412. At an appropriate time, the spooler 410 forwards the print job to the supervisor 420 associated with the physical printer 422 on which the spooler 420 scheduled the print job. The spooler 410 can support multiple supervisors 420. The supervisor server 420 delivers data to one or more of the output devices 500. The supervisor 420 receives the print jobs from the spooler 410, interprets the print jobs for print instructions and parameters, passes the print data, instructions and parameters to the appropriate output device 500, and handles any responses made by the output device 500.

The supervisor 420 receives client management requests that apply to print jobs forwarded to the supervisor, including those print jobs forwarded further to one of the output devices 500. The supervisor 420 also sends management requests to the spooler 410, such as, for example, a request for next job, and status updates, such as "job completed." The supervisor 420 also notifies the spooler 410 of events, such as canceling a print job in response to a "Job Cancel" management request from a user.

A logical printer 412 indicates particular characteristics and capabilities of one or more of it associated physical printers 422. The logical printers 412 are an abstraction of the printer capability of the network printing system 100. Each physical printer 422 represents one actual output device 500 connected to the network printing system 100. Attributes of the logical printers 412 and the physical printers 422 are stored on a database 600 associated with the network printing system 100. The printer attributes correspond to the print job attributes that are extracted from print requests. With regard to the print job, the attributes represent requirements of the print request. With regard to the printers, the attributes represent the print capabilities of the printers.

In a preferred embodiment of this invention, the database 600 resides on the server 400. However, it can be appreciated that the database 600 does not need to reside on the server 400, but can be resident on any device that is accessible by the server 400.

Print jobs are submitted to the logical printers 412 to determine which characteristics are associated with the print job, such as A4 paper, highlight color, and/or stapled output. The spooler 410 channels the print jobs via a queue 414 to the particular supervisor 420 that supports a physical printer 422 that is mapped to a logical printer 412 through the queue 414.

The queue 414 associates a set of print jobs with a set of logical printers 412 and a set of physical printers 414. The one or more queues 414 serve as a holding station for the print jobs until the spooler 410 can send them to the appropriate supervisor 420. Logical printers 412 feed print jobs into the queue 414 and the physical printers 422 request print jobs from the queue.

In an enterprise print server 100, when the supervisor 420 is ready to accept jobs, it forwards a request to its associated spooler 410. This request invokes a scheduler, which can be a software algorithm, that resides on the spooler to search for a job stored in its page memory that can print by matching the capabilities required to print the job to the capabilities of the printer 422 linked to the supervisor.

If the scheduler identifies a print job which can print on the printer 422 linked to the supervisor 420, then the spooler 410 forwards this print job to the supervisor 420 for subsequent forwarding or printing on the linked printer 422. Print jobs residing on the spooler 410 are only forwarded to a supervisor 420 if they can print on the supervisor linked printer 422. An example is an enterprise print server in which a spooler and a supervisor that is linked to a PCL printer exist. If PCL and PostScript jobs reside in the spooler page memory then only the PCL jobs shall be printed.

In an enterprise print server 100, a single spooler 410 may be configured to supply print jobs to any number of supervisors 420. This enables an enterprise print server to be configured to load balance across two or more printers 422, so a print job will be printed by the first available printer with the capabilities necessary to handle the print job. An example of this is that an enterprise print server can even load balance across dissimilar printers. For instance PCL and PCL/PostScript printers can be logically grouped, and the enterprise server will ensure that PCL jobs are printed on the first available printer, while PostScript jobs are sent only to the first available printer that prints Postscript.

Attributes define or characterize print management system's abstract entities, or objects. For example, document attributes, such as plex, margin, orientation, etcetera, describe how the printed material should appear. Printer Attributes, such as media-ready, fonts-ready, etc., describe the available resources or features of the printer. In addition to these attributes, there are a suite of attributes to facilitate end-user, operator and administrator functions. In summary, attributes are a set of data that describes the objects of the print management system.

Each object is defined by this set of attributes, which can contain static and dynamic attributes. The spooler 410 and supervisor 420 manipulate the object representation of an entity they are operating on by setting or changing the values of the object's attributes. For those attributes that can be manually changed, a user can observe the value of an attribute with a "list attributes" command and change the value of an attribute with a "set attributes" command. The print capabilities of a print system are limited by the predefined set of system attributes fixed for each printing system.

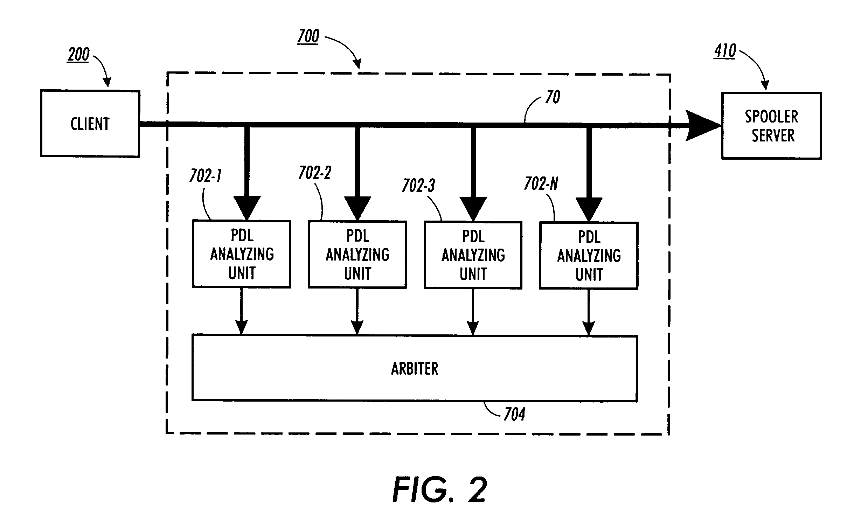

Referring to Figure 2, a PDL guesser 700 determines the PDL of a print job, transmitted from one of the clients 200 to the spooler 410. In the illustrated embodiment of Figure 2, the content of one of the network buses 70, i.e. the content of a print job stream, is scanned by various PDL analyzing units 702-1, 702-2, 702-3, . . . 702-N (hereinafter referred to conjunctively as "PDL analyzing units 702").

As is known, each print job assumes the form of a stream which is expressed in a PDL, the PDL representing image data and instructions for the print job. In the preferred embodiment, each PDL analyzing unit is capable of analyzing one PDL type. However, the PDL guesser with multiple analyzing units can analyze more than one PDL type and a single PDL guesser could be capable of analyzing all the PDL types. The PDL types may comprise, among others, PCL, PS, Interpress and TIFF. Preferably, one of the PDL analyzing units 702 is a binary filter which is used in conjunction with an arbiter, as explained in further detail below. As will be appreciated by those skilled in the art, the PDL analyzing units comprise a modular system and units can be added or deleted in accordance with the demands of the printing system 100.

For convenience of discussion, the PDL guesser 700 is shown with only one of network buses 70, but, in practice, the guesser arrangement 700 would be used with multiple buses. Additionally, the guesser arrangement 700 is shown as a multi-tasking model in which the stream is sampled in parallel, but in other embodiments, the stream could be sampled with a pipeline model, i.e. in sequence, without affecting the concept upon which the disclosed embodiment is based. Finally, while the guesser arrangement 700 is part of the spooler 410, the guesser arrangement 700 could be a service separate from the spooler 410.

In one preferred embodiment, each of the PDL analyzing units is a processor upon which software, suitable for analyzing the print job stream, is implemented. In another embodiment, the PDL analyzing units could be implemented in a multi-tasking system. As the print job stream is analyzed by the units 702, they transmit information signals I.sub.0, I.sub.1, I.sub.2, . . . I.sub.N, respectively, to an arbiter 704.

In one example, the arbiter (or "best guess arbiter") is a logical device or redundancy filter which is adapted to resolve ambiguities and set precedents. The arbiter 704, is preferably implemented with a combination of hardware and software, and is programmable. In the preferred embodiment, the arbiter communicates with various inputs other than the information signals. The primary purpose of the arbiter is to process the information signals from the analyzing units of the guesser for outputting a signal indicating the PDL of the print job stream. As shown in Figure 2, that output signal is transmitted from the arbiter 704 to the spooler 410.

Referring to Figure 2, the print job stream is communicated to the PDL analyzing units 702. Some PDLs are recognized by their "signatures" while other PDLs are recognized by the frequency of occurrence of certain "operators". An example of a PDL characterized by a signature is Interpress, while a PDL characterized by the frequent occurrence of certain operators is PS. An example of an Interpress signature is a "header" portion. Each analyzing unit examines the stream to determine if a signatures is present. If a signature is present, then the PDL signature is translated into an information signal and transmitted to the arbiter 704. For any analyzing units without a signature, a negative indication is sent to the arbiter 704 from any PDL analyzer unit that identifies PDLs solely on the basis of a signature. The nonsignature based PDL analyzing units scan the print job stream for either a single operator or sets of operators. If an operator or set of operators is present, then the PDL signal is translated into an information signal and transmitted to the arbiter 704.

Based on the PDL determined from the data sample of the print job document, the guesser sets the attribute for the PDL for that document. The scheduler of the spooler will read the PDL attribute of the document of the print job and schedule the print job to the appropriate physical printer that can print a document with that specific PDL.

This is critical since printers that are linked to a supervisor will only correctly print jobs that are in a PDL or Image Format that the printer supports. The use of this method helps eliminate print jobs printing incorrectly because they were sent to a printer which does not support the PDL or Image Format in which the print job is formatted. The supported PDLs or Image Formats that a printer supports is the major distinguishing factor between printers.

Each of the information signals generated by the PDL analyzing units 702 within one PDL guesser 700 are outputted and the information signals are transmitted to the arbiter 704 of that PDL guesser. Each of the signals are then arbitrated, conjunctively, with the arbiter 704. The arbiter, in the preferred embodiment, operates by a set of rules, which may be hard-coded or may be programmed dynamically through use of a configuration file. Preferably, the configuration file assumes a hierarchical form of the type shown in US Patent No. 5,467,434, commonly assigned as the present application and herein incorporated by reference.

After the information signals have been arbitrated with the arbiter 704, the resulting arbitrated signal, indicating the PDL of the print job stream, is transmitted to the spooler 410. The attribute is then set on the spooler for that document. The spooler uses this information to insure that the print job is sent to a physical printer in which the appropriate PDL interpreter resides.

## Claims

1. A printing system that distributes documents among a plurality of printers in a networked printing system comprising:
a spooler (410) that receives documents and generates a print job from each document,
a page description language guesser (700) having a plurality of page description language analyzing units (702-1...702-N) on said spooler, said plurality of page description language analyzing units for sampling a data sample from said document, analyzing said data sample and determining the page description language of said document, said plurality of page description language analyzing units setting an attribute for said document to indicate the page description language for said print job of said document,
a scheduler on said spooler, said scheduler reading said attribute of said print job of said document and scheduling said print job on one of said plurality of printers which can print said page description language of said print job of said document, and
a supervisor (420) for forwarding said print job of said document from said spooler to said one of said plurality of printers for printing said document.

2. A printing system according to claim 1, wherein each of said page description language analyzing units (702-1...702-N) outputs a signal regarding the page description language of said data sample from said document, and further comprising,
an arbiter (704) for receiving and processing said signals from said plurality of page description language analyzing units, said arbiter determining the page description language of said document, said plurality of page description language analyzing units setting an attribute for said document to indicate the page description language for said print job of said document.

3. A printing system according to claim 2, further comprising a binary filter for providing said arbiter (704) with an indication of a percentage of binary characters in said print job to prevent erroneously indicating that said print job is written predominantly in one page description language when it is written predominantly in another page description language.

4. A printing system according to any of the preceding claims, wherein said data sample includes an operator representative of, or a characteristic signature of, said page description language in which said print job is written, wherein said plurality of said page description language analyzing units analyze said data sample for said representative operator or characteristic signature respectively to determine said page description language.

5. A method for distributing document printing among a plurality of printers in a networked printing system comprising:
receiving documents at the networked printing system,
generating a print job from each document by a spooler (410),
sampling a data sample from said document, analyzing said data sample by a page description language guesser (700) having a plurality of page description language analyzing units (702-1...702-N) to determine the page description language of said document, setting an attribute for said document to indicate the page description language of said document for said print job,
reading said attribute of said print job of said document, scheduling said print job on one of said plurality of printers which can print said page description language of said print job of said document, and
forwarding said print job of said document to said one of said plurality of printers for printing said document by a supervisor.
